(19) Europäisches Patentamt
European Patent Office
Office européen des brevets

(11) EP 0 733 679 A2

(12) EUROPÄISCHE PATENTANMELDUNG

(43) Veröffentlichungstag:
25.09.1996 Patentblatt 1996/39

(51) Int. Cl.[6]: C09B 62/008, D06P 1/38, D06P 3/10, D06P 3/66

(21) Anmeldenummer: 96103599.5

(22) Anmeldetag: 08.03.1996

(84) Benannte Vertragsstaaten:
CH DE FR GB LI

(30) Priorität: 21.03.1995 DE 19510135

(71) Anmelder: BAYER AG
51368 Leverkusen (DE)

(72) Erfinder: Jäger, Horst, Dr.
51375 Leverkusen (DE)

# (54) Monoazoreaktivfarbstoffe

(57) Es wurden Monoazoreaktivfarbstoffe gefunden, die in Form der freien Säure geschrieben der allgemeinen Formel (I) entsprechen

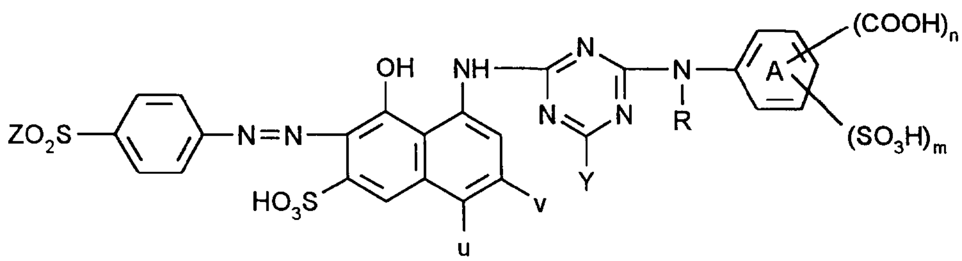

(I),

worin

Y für Cl oder F, insbesondere Cl steht,

Z für $CH=CH_2$ oder $CH_2CH_2X$ steht, wobei

R, X, n und m die in der Beschreibung angegebenen Bedeutung besitzen und der Phenylring A neben den Sulfo- und/oder Carboxygruppen noch mindestens einen weiteren in der Beschreibung genannten Substituenten trägt.

EP 0 733 679 A2

## Beschreibung

Die Erfindung betrifft Monoazoreaktivfarbstoffe, ein Verfahren zu ihrer Herstellung sowie ihre Verwendung zum Färben und Bedrucken von Hydroxyl- oder Amidgruppen-haltigen Materialien.

Aus EP-A-32 187 sind bereits ähnliche Monoazoreaktivfarbstoffe bekannt, die jedoch noch gewisse anwendungstechnische Nachteile aufweisen.

Es wurden nun Monoazoreaktivfarbstoffe gefunden, die in Form der freien Säure geschrieben der allgemeinen Formel (I) entsprechen

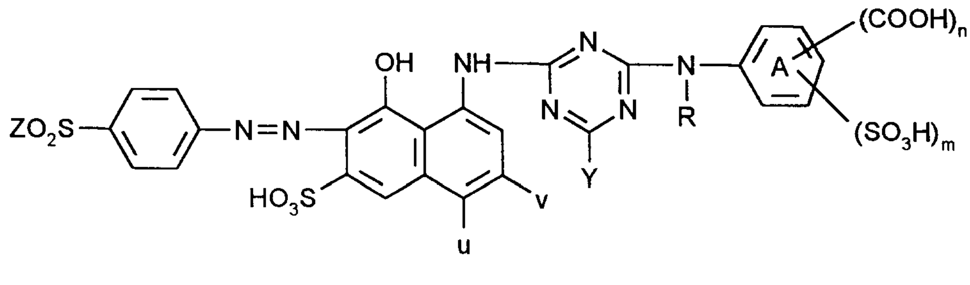

(I),

worin

Y für Cl oder F, insbesondere für Cl steht,

Z für $CH{=}CH_2$ oder $CH_2CH_2X$ steht, wobei

X einen unter alkalischen Bedingungen abspaltbaren Substituenten bedeutet,

u und v unabhängig voneinander für Wasserstoff oder eine Sulfogruppe stehen, wobei $u \neq v$,

R Wasserstoff oder $C_1$-$C_4$-Alkyl, insbesondere Methyl oder Ethyl, bedeutet, wobei der Phenylring A neben den Sulfo- und/oder Carboxygruppen noch mindestens einen Substituenten aus der Reihe Halogen, insbesondere Cl, $C_1$-$C_4$-Alkyl, insbesondere Methyl oder Ethyl, $C_1$-$C_4$-Alkoxy, insbesondere Methoxy oder Ethoxy, Amino, $C_1$-$C_4$-Alkylamino, insbesondere Methylamino oder Ethylamino, Acylamino, insbesondere Propionylamino, Oxalylamino, Benzoylamino und/oder Hydroxy trägt und

m und n unabhängig voneinander 0, 1 oder 2 bedeuten, wobei $m + n = 1$ oder 2 .

Beispiele für Substituenten X sind:
$OSO_3H$, Cl, $OPO_3H_2$, $S_2O_3H$, $OCOCH_3$.

Bevorzugt sind Farbstoffe der Formel (I), in denen

R für Wasserstoff,

u für Wasserstoff und

v für die Sulfogruppe und

Z für $CH{=}CH_2$ oder $CH_2CH_2OSO_3H$ steht.

Weiterhin bevorzugt sind Farbstoffe der Formel (I), in denen der Rest

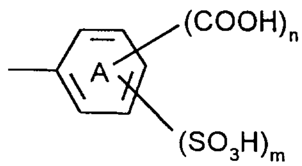

eine der folgenden Bedeutungen hat:

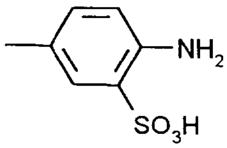
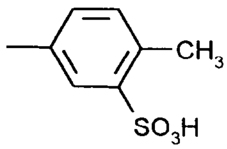
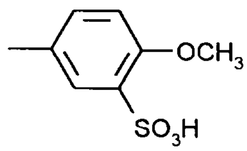
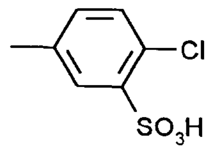

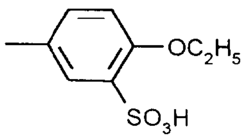
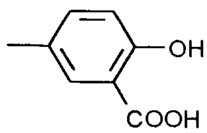
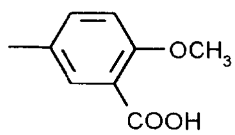
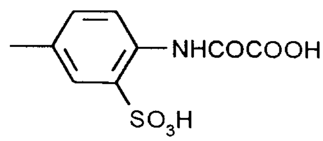

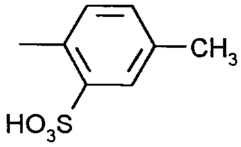
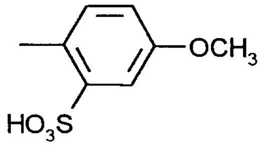
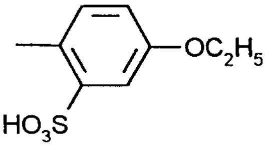
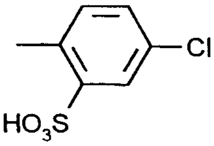

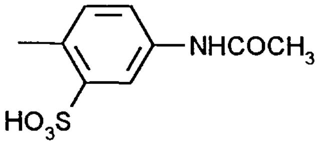
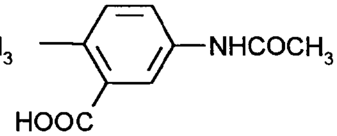
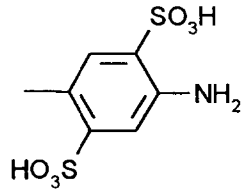
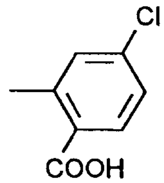

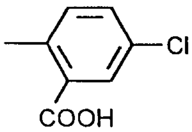
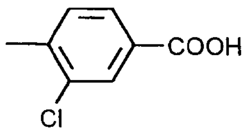
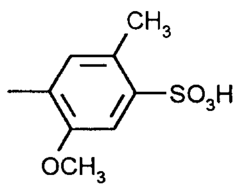
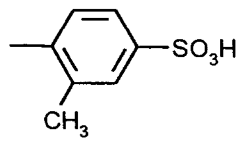

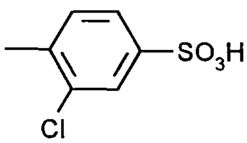
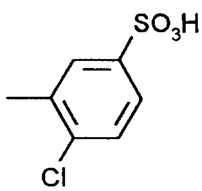
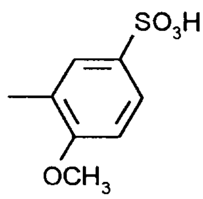
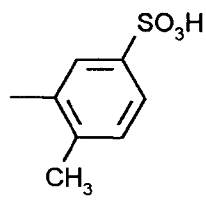

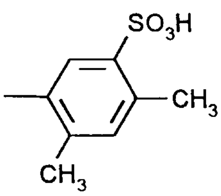
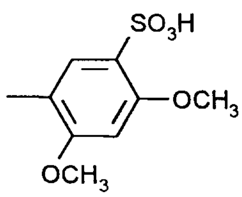
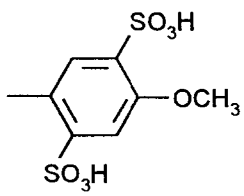
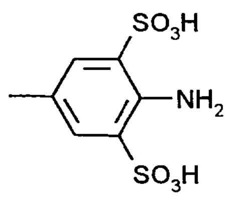

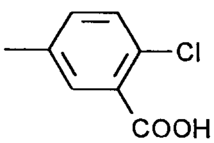
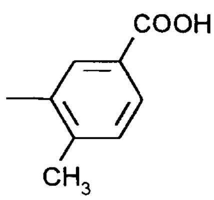
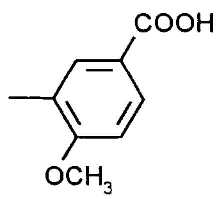
.

Die Reaktionsbedingungen zur Herstellung der Farbstoffe der Formel (I) entsprechen den auf dem Gebiet der Acylierung, Diazotierung und Kupplung üblichen Bedingungen. Vorzugsweise arbeitet man im wäßrigen Medium.

Die Herstellung erfolgt beispielsweise dadurch, daß man ein Amin der Formel (II)

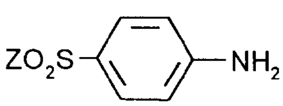
(II),

worin

Z die angegebene Bedeutung hat,

in wäßrigem mineralsauren Medium diazotiert und anschließend bei einem pH von 3 bis 7 mit einem Dihalogentriazinderivat der Formel (III)

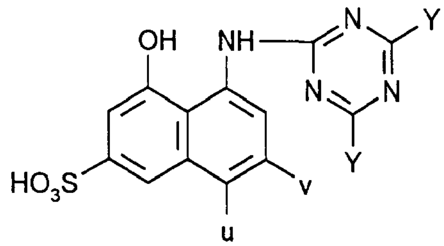

(III),

worin

Y für Cl oder F, insbesondere für Cl steht und

u und v die angegebene Bedeutung haben,

kuppelt und den resultierenden Monoazofarbstoff der Formel (IV)

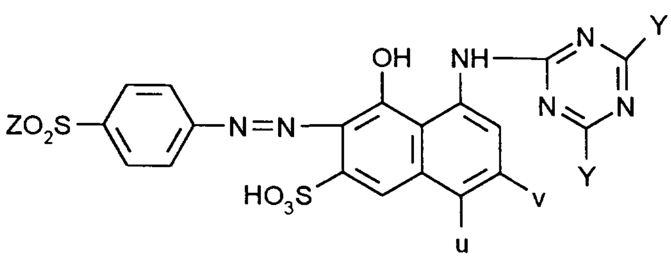

(IV)

mit einem Anilinderivat der Formel (V)

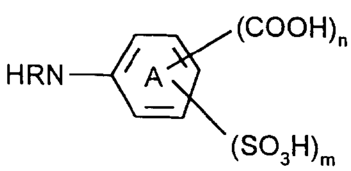

(V),

worin
R, m und n die angegebene Bedeutung haben und der Ring A, wie oben beschrieben, weiter substituiert ist, bei einem pH von 3 bis 6, insbesondere 4 bis 5, und einem Temperaturbereich von 0 bis 60°C, insbesondere 15 bis 45°C, zu einem Farbstoff der Formel (I) umsetzt.

Eine weitere Möglichkeit zur Herstellung der Farbstoffe der Formel (I) besteht darin, daß man die Dihalogentriazinverbindung der Formel (III) mit einem Anilinderivat der Formel (V) bei einem pH von 3 bis 6, insbesondere 4 bis 5, und einer Temperatur von 0 bis 60°C, insbesondere 10 bis 40°C, zu einer Verbindung der Formel (VI)

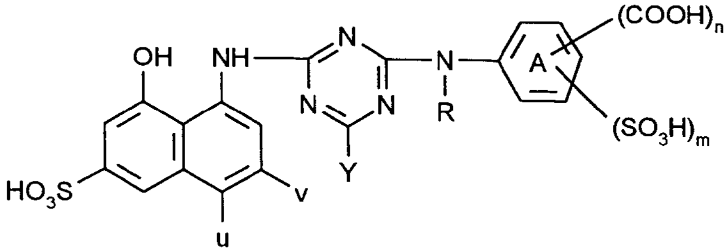

(VI),

worin

Y, u, v, R, m und n die angegebene Bedeutung haben und der Ring A in der oben beschriebenen Weise weitersubstituiert ist, kondensiert und diese dann mit dem diazotiertem Amin der Formel (II) im pH-Bereich von 3 bis 7, insbesondere 4 bis 6, zu einem Farbstoff der Formel (I) kuppelt.

Die Isolierung der nach den vorstehend beschriebenen Verfahren erhaltenen Reaktivfarbstoffe erfolgt in üblicher Weise durch Aussalzen, beispielsweise mit Natrium- oder Kaliumchlorid, oder durch Eindampfen der neutralen wäßrigen Farbstofflösung, vorzugsweise bei mäßig erhöhter Temperatur und vermindertem Druck oder durch Sprühtrocknung. Die Farbstoffe können als Feststofformierungen wie auch als konzentrierte Lösungen eingesetzt werden.

In einer bevorzugten Ausführungsform werden die erfindungsgemäßen Farbstoffe als Granulat verwendet. Die Granulate der erfindungsgemäßen Farbstoffe können beispielsweise in folgenden Schritten erhalten werden:

Mischgranulierung

Dabei wird das Farbstoffpulver mit 15 bis 55 % Wasser - bezogen auf das Gewicht des Pulvers - befeuchtet, anschließend in einem Mischgranulator das Granulat unter trockenden Bedingungen gebildet und gegebenenfalls entstaubt, wobei das Entstaubungsmittel vorzugsweise als Aerosolgemisch auf das Granulat gesprüht wird.

Sprühgranulierung

Dabei wird die Synthese-Lösung oder -Suspension in einem fluidisierenden Sprühtrockner gleichzeitig getrocknet und granuliert.

Die Erfindung betrifft weiterhin feste Farbstoffpräparationen, insbesondere Farbstoffpulver oder Farbstoffgranulate, die 30 - 95 Gew.-% eines Reaktivfarbstoffes der Formel (I), 5 - 15 Gew.-% Wasser (Restfeuchte), enthalten, jeweils bezogen auf die Präparation. Daneben können sie noch weitere Zusätze wie anorganische Salze wie Alkalichloride oder Alkalisulfate, Dispergiermittel, Netzmittel, Entstaubungsmittel sowie weitere übliche Stellmittel enthalten.

Bevorzugte Feststoffpräparationen enthalten zusätzlich Puffersubstanzen, die beim Auflösen in der 20-fachen Menge Wasser (bezogen auf das Gewicht der Feststoffpräparation) einen pH-Wert von 3,5 bis 7,5, inbesondere 4,5 bis 6,5, geben. Diese Puffersubstanzen werden vorzugsweise in Mengen von 3 bis 50, insbesondere 5 bis 15 Gew.-%, bezogen auf das Gesamtgewicht, zugesetzt.

Wäßrige Reaktivfarbstofflösungen enthalten im allgemeinen 5 bis 50 Gew.-% eines Farbstoffes der Formel (I) (bezogen auf das Gesamtgewicht der Lösung).

Bevorzugte wäßrige Reaktivfarbstofflösungen enthalten zusätzlich Puffersubstanzen und weisen einen pH-Wert von 3,5 bis 7,5, insbesondere 4,5 bis 6,5, auf.

Diese Puffersubstanzen werden vorzugsweise in Mengen von 0,1 bis 50, insbesondere 1 bis 20 Gew.-%, bezogen auf das Gesamtgemisch, zugesetzt.

Die verwendeten Puffer sind inert gegenüber den Reaktivgruppen. Beispiele für Puffer sind: Natriumdihydrogenphosphat, Dinatriumdihydrogenphosphat, Kaliumhydrogenphosphat, Dikaliumhydrogenphosphat, Natriumacetat, Kaliumacetat, Natriumborat, Kaliumborat, Natriumoxalat, Kaliumoxalat und Natriumhydrogenphthalat. Diese Puffer können für sich allein oder in Mischung verwendet werden.

Die erfindungsgemäßen Reaktivfarbstoffe der Formel (I) besitzen wertvolle Farbstoffeigenschaften. Infolge der faserreaktiven Gruppe $SO_2Z$ und des Chlortriazinyl-Restes weisen sie faserreaktive Eigenschaften auf.

Die erfindungsgemäßen Reaktivfarbstoffe der Formel (I) ergeben Färbungen mit guten Naß- und Lichtechtheiten. Besonders hervorzuheben ist es, daß die Farbstoffe eine gute Löslichkeit und Elektrolytlöslichkeit bei guten Auszieheigenschaften und hoher Farbstoff-Fixierung aufweisen, und daß sich die nicht fixierten Anteile leicht entfernen lassen.

Die erfindungsgemäßen Reaktivfarbstoffe der Formel (I) eignen sich zum Färben und Bedrucken von Hydroxyl- oder Amidgruppen enthaltenden Materialien, wie Textilfasern, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzewirkung nach den für Reaktivfarbstoffe bekannt gewordenen Verfahren erfolgt.

Die angegebenen Formeln sind die der entsprechenden freien Säuren. Die Farbstoffe werden im allgemeinen in Form der Alkalisalze, insbesondere der Na-Salze isoliert und zum Färben eingesetzt.

**Beispiel 1**

**a) Acylierung der H-Säure mit Cyanurchlorid**

Eine neutrale Lösung von 31,8 g 1-Amino-8-hydroxynaphthalin-3,6-disulfonsäure (H-Säure) in 200 ml Wasser wurde zu einer Anschlämmung von 18,5 g Cyanurchlorid und 0,1 g eines Netzmittels in 200 ml Eiswasser getropft. Es wurden ca. 2 h bei 10 bis 12°C gerührt, bis sich keine H-Säure mehr nachweisen ließ.

**b) Diazotierung**

28,1 g 4-(β-Sulfatoethylsulfonyl)-anilin wurden in 400 ml Eiswasser bei pH 5 bis 6 gelöst. Dazu wurden dann 28 ml 30 %ige Salzsäure gegeben und tropfenweise mit 70 ml 10 %iger Natriumnitritlösung versetzt. Es wurde 1 h nachgerührt und der Überschuß an Nitrit mit Amidosulfonsäure entfernt.

**c) Kupplung**

Die nach a) erhaltene Lösung wurde mit der Suspension der nach b) erhaltenen Diazoverbindung versetzt. Durch Einstreuen von Natriumhydrogencarbonat wurde ein pH von 3 bis 5 eingestellt und solange gerührt bis sich keine Diazoverbindung mehr nachweisen ließ.

**d) Kondensation**

Der nach c) erhaltene Azofarbstoff wurde mit 18,7 g 2-Methyl-5-aminobenzolsulfonsäure-1 versetzt und die Temperatur auf 25°C gebracht, wobei ein pH von 4,5 durch Einstreuen von Bicarbonat aufrechterhalten wurde. Nach mehrstündigem Rühren war die Kondensation zu Ende. In wäßriger Lösung lag dann folgender Farbstoff vor:

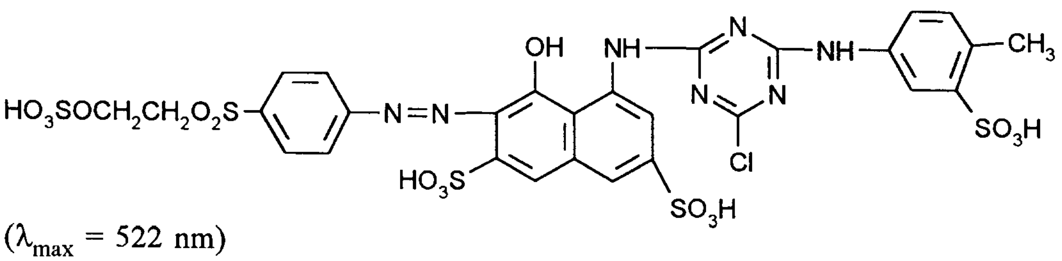

($\lambda_{max}$ = 522 nm)

Zur Isolierung wurde die Lösung des Farbstoffes mit 10 Vol.-% Natriumchlorid versetzt. Der resultierende Niederschlag wurde abgesaugt, bei 70°C im Umlufttrockenschrank getrocknet und gemahlen. Man erhielt ein leicht in Wasser lösliches rotes Pulver.

Verfuhr man nach den Angaben dieses Beispiels und verwendete für die Stufe a) entweder 1-Amino-8-hydroxynaphthalin-3,6-disulfonsäure (H-Säure) oder 1-Amino-8-hydroxynaphthalin-3,5-disulfonsäure (K-Säure) und für die Stufe c) die in der nachfolgenden Tabelle aufgeführten Anilinderivate, so resultierten gleichfalls wertvolle Baumwollreaktivfarbstoffe, die Baumwolle in einem klaren Rotton färben, wobei die mit K-Säure hergestellten Farbstoffe bei sonst gleicher Struktur im Farbton etwas gelbstichiger rot sind als die entsprechenden H-Säure Farbstoffe.

| Beispiel | Stufe a | Stufe c | $\lambda_{max}$ (nm) |
|---|---|---|---|
| 2 | H-Säure | 2-Chlor-5-amino-benzolsulfonsäure-1 | 520 |
| 3 | H-Säure | 2-Methoxy-5-amino-benzolsulfonsäure-1 | 523 |
| 4 | H-Säure | 2-Amino-5-amino-benzolsulfonsäure-1 | 525 |
| 5 | H-Säure | 2-Ethoxy-5-amino-benzolsulfonsäure-1 | 523 |
| 6 | H-Säure | 2-Amino-5-methyl-benzolsulfonsäure-1 | 521 |
| 7 | H-Säure | 2-Amino-5-chlor-benzolsulfonsäure-1 | 520 |
| 8 | H-Säure | 2-Amino-5-methoxy-benzolsulfonsäure-1 | 523 |
| 9 | H-Säure | 2-Amino-5-ethoxy-benzolsulfonsäure-1 | 523 |
| 10 | H-Säure | 2-Amino-5-acetylamino-benzolsulfonsäure-1 | 523 |
| 11 | H-Säure | 2,5-Diamino-benzolsulfonsäure-1 | 525 |
| 12 | H-Säure | 3-Amino-6-hydroxy-benzoesäure | 523 |
| 13 | H-Säure | 3-Amino-6-methoxy-benzoesäure | 523 |
| 14 | H-Säure | 2-Amino-4-acetylamino-benzoesäure | 524 |
| 15 | H-Säure | 2-Amino-5-acetylamino-benzoesäure | 524 |
| 16 | H-Säure | 4-Amino-3-methyl-benzolsulfonsäure-1 | 521 |
| 17 | H-Säure | 4-Amino-3-methoxy-benzolsulfonsäure-1 | 523 |
| 18 | H-Säure | 4-Amino-3-chlor-benzolsulfonsäure-1 | 520 |
| 19 | H-Säure | 4-Amino-3-ethyl-benzolsulfonsäure-1 | 521 |
| 20 | H-Säure | 3-Amino-4-chlor-benzolsulfonsäure-1 | 520 |
| 21 | H-Säure | 3-Amino-4-methyl-benzolsulfonsäure-1 | |
| 22 | H-Säure | 3-Amino-4-methoxy-benzolsulfonsäure-1 | |
| 23 | H-Säure | 3-Amino-4-ethoxy-benzolsulfonsäure-1 | |
| 24 | H-Säure | 3-Amino-4,6-dimethoxy-benzolsulfonsäure-1 | |
| 25 | H-Säure | 2-Amino-5-methoxy-benzoldisulfonsäure-1,4 | |

| Beispiel | Stufe a | Stufe c |
|---|---|---|
| 26 | H-Säure | 2-Amino-5-amino-benzoldisulfonsäure-1,4 |
| 27 | H-Säure | 2-Amino-5-amino-benzoldisulfonsäure-1,3 |
| 28 | H-Säure | 2-Amino-4-methyl-benzolsulfonsäure-1 |
| 29 | H-Säure | 2-Amino-4-hydroxy-benzolsulfonsäure-1 |
| 30 | H-Säure | 2-Amino-4-methoxy-benzolsulfonsäure-1 |
| 31 | H-Säure | 2,4-Diamino-benzolsulfonsäure-1 |
| 32 | H-Säure | 2-Amino-4-acetylamino-benzolsulfonsäure-1 |
| 33 | H-Säure | 2-Amino-4-chlor-benzoesäure |
| 34 | H-Säure | 2-Amino-5-chlor-benzoesäure |
| 35 | H-Säure | 2-Amino-3,5-dichlor-benzoesäure |
| 36 | H-Säure | 3-Amino-4-chlor-benzoesäure |
| 37 | H-Säure | 3-Amino-6-chlor-benzoesäure |
| 38 | H-Säure | 3-Amino-4-methyl-benzoesäure |
| 39 | H-Säure | 2-Hydroxy-3-amino-benzoesäure |
| 40 | H-Säure | 2-Hydroxy-4-amino-benzoesäure |
| 41 | H-Säure | 3-Amino-4-methoxy-benzoesäure |
| 42 | K-Säure | 2-Methyl-5-amino-benzolsulfonsäure-1 |
| 43 | K-Säure | 2-Chlor-5-amino-benzolsulfonsäure-1 |
| 44 | K-Säure | 2-Methoxy-5-amino-benzolsulfonsäure-1 |
| 45 | K-Säure | 2-Amino-5-amino-benzolsulfonsäure-1 |
| 46 | K-Säure | 2-Ethoxy-5-amino-benzolsulfonsäure-1 |
| 47 | K-Säure | 2-Amino-5-methyl-benzolsulfonsäure-1 |
| 48 | K-Säure | 2-Amino-5-chlor-benzolsulfonsäure-1 |
| 49 | K-Säure | 2-Amino-5-methoxy-benzolsulfonsäure-1 |

| Beispiel | Stufe a | Stufe c |
|---|---|---|
| 50 | K-Säure | 2-Amino-5-ethoxy-benzolsulfonsäure-1 |
| 51 | K-Säure | 2-Amino-5-acetylamino-benzolsulfonsäure-1 |
| 52 | K-Säure | 2,5-Diamino-benzolsulfonsäure-1 |
| 53 | K-Säure | 3-Amino-6-hydroxy-benzoesäure |
| 54 | K-Säure | 3-Amino-6-methoxy-benzoesäure |
| 55 | K-Säure | 2-Amino-4-acetylamino-benzoesäure |
| 56 | K-Säure | 2-Amino-5-acetylamino-benzoesäure |
| 57 | K-Säure | 4-Amino-3-methyl-benzolsulfonsäure-1 |
| 58 | K-Säure | 4-Amino-3-methoxy-benzolsulfonsäure-1 |
| 59 | K-Säure | 4-Amino-3-chlor-benzolsulfonsäure-1 |
| 60 | K-Säure | 4-Amino-3-ethyl-benzolsulfonsäure-1 |
| 61 | K-Säure | 3-Amino-4-chlor-benzolsulfonsäure-1 |
| 62 | K-Säure | 3-Amino-4-methyl-benzolsulfonsäure-1 |
| 63 | K-Säure | 3-Amino-4-methoxy-benzolsulfonsäure-1 |
| 64 | K-Säure | 3-Amino-4-ethoxy-benzolsulfonsäure-1 |
| 65 | K-Säure | 3-Amino-4,6-dimethoxy-benzolsulfonsäure-1 |
| 66 | K-Säure | 2-Amino-5-methoxy-benzoldisulfonsäure-1,4 |
| 67 | K-Säure | 2-Amino-5-amino-benzoldisulfonsäure-1,4 |
| 68 | K-Säure | 2-Amino-5-amino-benzoldisulfonsäure-1,3 |
| 69 | K-Säure | 2-Amino-4-methyl-benzolsulfonsäure-1 |
| 70 | K-Säure | 2-Amino-4-hydroxy-benzolsulfonsäure-1 |
| 71 | K-Säure | 2-Amino-4-methoxy-benzolsulfonsäure-1 |
| 72 | K-Säure | 2,4-Diamino-benzolsulfonsäure-1 |
| 73 | K-Säure | 2-Amino-4-acetylamino-benzolsulfonsäure-1 |

| Beispiel | Stufe a | Stufe c |
|---|---|---|
| 74 | K-Säure | 2-Amino-4-chlor-benzoesäure |
| 75 | K-Säure | 2-Amino-5-chlor-benzoesäure |
| 76 | K-Säure | 2-Amino-3,5-dichlor-benzoesäure |
| 77 | K-Säure | 3-Amino-4-chlor-benzoesäure |
| 78 | K-Säure | 3-Amino-6-chlor-benzoesäure |
| 79 | K-Säure | 3-Amino-4-methyl-benzoesäure |
| 80 | K-Säure | 2-Hydroxy-3-amino-benzoesäure |
| 81 | K-Säure | 2-Hydroxy-4-amino-benzoesäure |
| 82 | K-Säure | 3-Amino-4-methoxy-benzoesäure |

## Beispiel 83

**a) Acylierung der H-Säure mit Trifluortriazin**

31,8 g 1-Amino-8-hydroxynaphthalin-3,6-disulfonsäure (H-Säure) wurden neutral in 300 ml Eiswasser gelöst. Nach dem Zusatz von 2 g Natriumfluorid wurden 13,5 g Trifluortriazin unter gutem Rühren eingetropft. Es resultierte eine klare Lösung, in der sich keine H-Säure mehr nachweisen ließ.

**b) Kondensation**

Die nach a) erhaltene eiskalte Lösung wurde mit einer neutralen Lösung von 18,7 g 2-Methyl-5-amino-benzolsulfonsäure-1 in 100 ml Wasser versetzt und der pH durch Einstreuen von Natriumbicarbonat auf 5 gestellt. Man ließ die Temperatur auf 15°C ansteigen, wobei die Kondensation zu Ende ging.

**c) Diazotierung**

28,1 g 4-(β-Sulfatoethylsulfonyl)-anilin wurden in 400 ml Eiswasser bei pH 5 bis 6 gelöst. Dazu wurden dann 28 ml 30 %ige Salzsäure gegeben und tropfenweise mit 70 ml 10 %iger Natriumnitritlösung versetzt. Es wurde 1 h nachgerührt und der Überschuß an Nitrit mit Amidosulfonsäure entfernt.

**d) Kupplung**

Die nach b) erhaltene Lösung wurde mit der Suspension der nach c) erhaltenen Diazoverbindung versetzt. Durch Einstreuen von Natriumhydrogencarbonat wurde ein pH von 3 bis 5 eingestellt und solange gerührt bis sich keine Diazoverbindung mehr nachweisen ließ.

In wäßriger Lösung lag dann folgender Farbstoff vor:

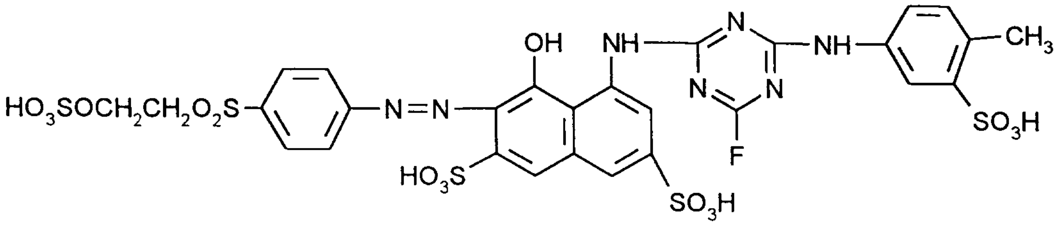

Zur Isolierung wurde die Lösung des Farbstoffes mit 10 Vol.-% Natriumchlorid versetzt. Der resultierende Niederschlag wurde abgesaugt, bei 70°C im Umlufttrockenschrank getrocknet und gemahlen. Man erhielt ein leicht in Wasser lösliches rotes Pulver.

Verfuhr man nach den Angaben dieses Beispiels und verwendete für die Stufe a) entweder 1-Amino-8-hydroxynaphthalin-3,6-disulfonsäure (H-Säure) oder 1-Amino-8-hydroxynaphthalin-3,5-disulfonsäure (K-Säure) und für die Stufe b) die in den Beispielen 2 bis 41 aufgeführten Anilinderivate, so resultierten gleichfalls wertvolle Baumwollreaktivfarbstoffe, die Baumwolle in einem klaren Rotton färben, wobei die mit K-Säure hergestellten Farbstoffe bei sonst gleicher Struktur im Farbton etwas gelbstichiger rot sind als die entsprechenden H-Säure Farbstoffe.

**Patentansprüche**

1. Verbindungen, die in Form der freien Säure der allgemeinen Formel (I) entsprechen

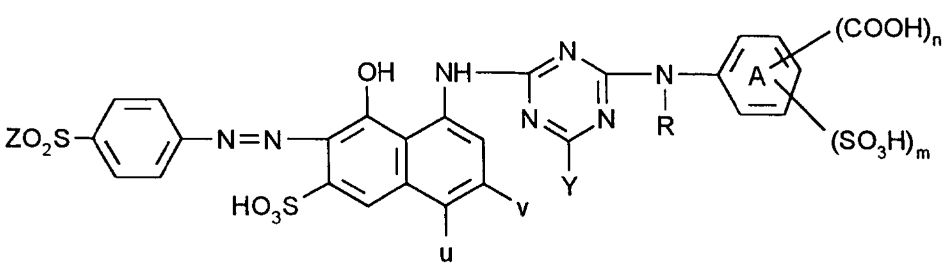 (I),

worin

| | |
|---|---|
| Y | für Cl oder F, insbesondere für Cl steht, |
| Z | für $CH{=}CH_2$ oder $CH_2CH_2X$ steht, wobei |
| X | einen unter alkalischen Bedingungen abspaltbaren Substituenten bedeutet, |
| u und v | unabhängig voneinander für Wasserstoff oder eine Sulfogruppe stehen, wobei $u \neq v$, |
| R | Wasserstoff oder $C_1$-$C_4$-Alkyl bedeutet, wobei der Phenylring A neben den Sulfo- und/oder Carboxygruppen noch mindestens einen Substituenten aus der Reihe Halogen, $C_1$-$C_4$-Alkyl, $C_1$-$C_4$-Alkoxy, Amino, $C_1$-$C_4$-Alkylamino, Acylamino und/oder Hydroxy trägt und |
| m und n | unabhängig voneinander 0, 1 oder 2 bedeuten, wobei $m + n = 1$ oder 2 . |

2. Verbindungen gemäß Anspruch 1, worin

X für $OSO_3H$, Cl, $OPO_3H_2$, $S_2O_3H$ oder $OCOCH_3$ steht.

**3.** Verbindungen gemäß Anspruch 1, worin

R Wasserstoff,

u Wasserstoff,

v Sulfo und

Z $CH=CH_2$ oder $CH_2CH_2OSO_3H$ bedeuten.

**4.** Verbindungen gemäß Anspruch 1, worin Y für Cl steht.

**5.** Verbindungen gemäß Anspruch 1, in denen der Rest

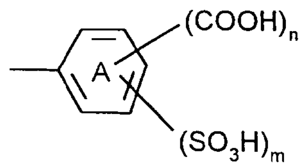

eine der folgenden Bedeutungen hat:

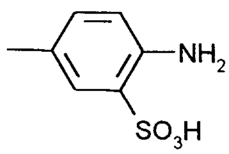
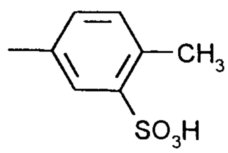
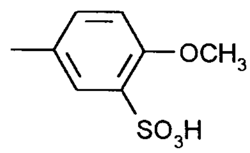
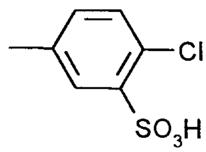

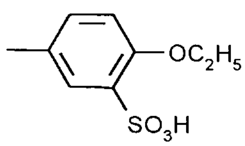
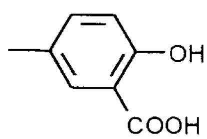
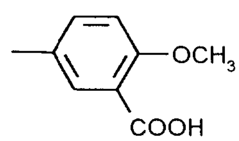
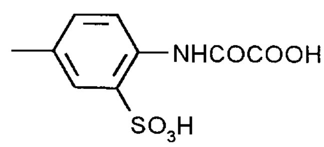

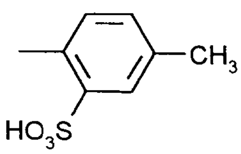
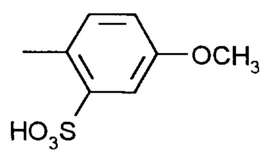
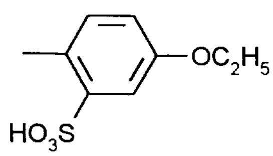
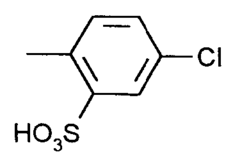

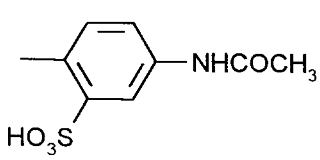
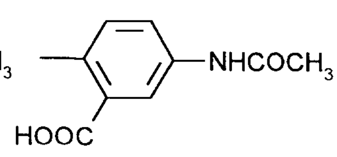
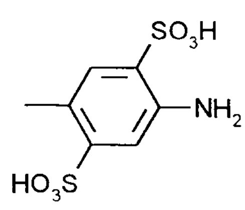
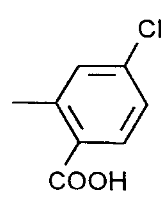

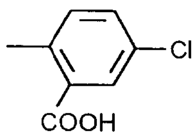
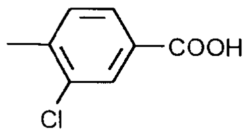
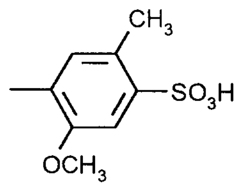
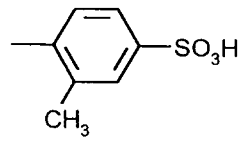

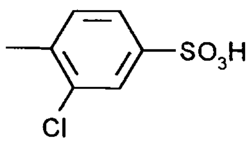
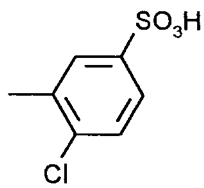
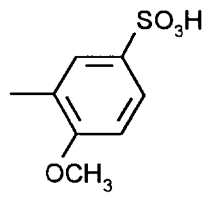
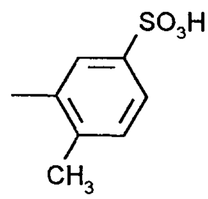

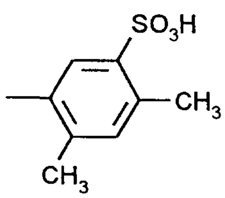
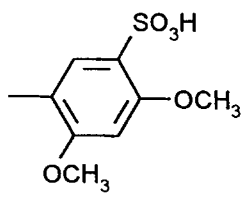
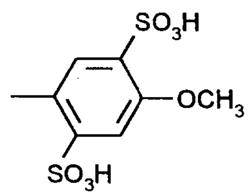
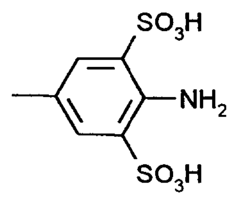

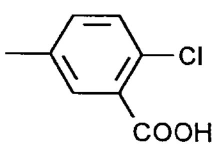
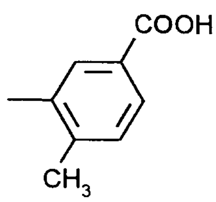
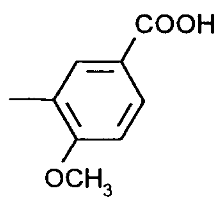

**6.** Verfahren zur Herstellung von Verbindungen der Formel (I) gemäß Anspruch 1, dadurch gekennzeichnet, daß man ein Amin der Formel (II)

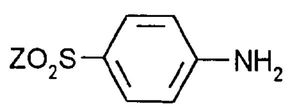 (II),

worin

Z die in Anspruch 1 angegebene Bedeutung hat,

in wäßrigem mineralsauren Medium diazotiert und anschließend bei einem pH von 3 bis 7 mit einem Dihalogentriazinderivat der Formel (III)

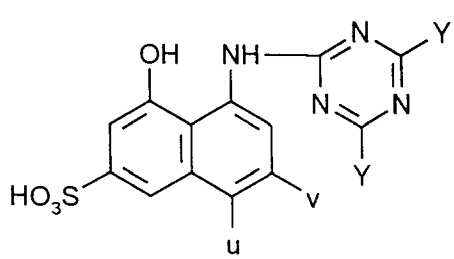 (III),

worin

Y für Cl oder F, insbesondere für Cl steht und

u und v die in Anspruch 1 angegebene Bedeutung haben,

kuppelt und den resultierenden Monoazofarbstoff der Formel (IV)

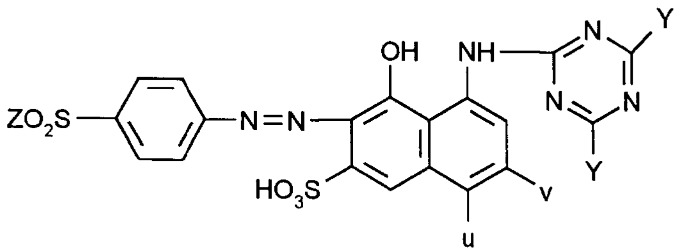

(IV)

mit einem Anilinderivat der Formel (V)

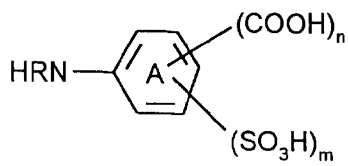

(V),

worin
R, m und n die in Anspruch 1 angegebene Bedeutung haben und der Ring A, wie in Anspruch 1 beschrieben, weiter substituiert ist,
bei einem pH von 3 bis 6, insbesondere 4 bis 5, und einem Temperaturbereich von 0 bis 60°C, insbesondere 15 bis 45°C, zu einem Farbstoff der Formel (I) umsetzt

**7.** Verfahren zur Herstellung von Verbindungen der Formel (I) gemäß Anspruch 1, dadurch gekennzeichnet, daß man eine Dihalogentriazinverbindung der Formel (III)

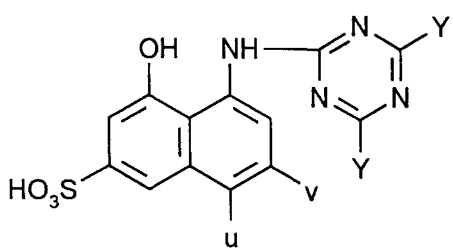

(III),

worin

Y für Cl oder F steht und

u und v die in Anspruch 1 angegebene Bedeutung haben,

mit einem Anilinderivat der Formel (V)

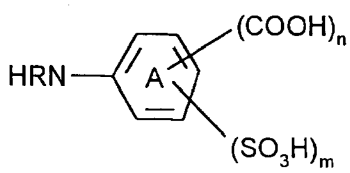

(V),

worin
R, m und n die angegebene Bedeutung haben und der Ring A, wie oben beschrieben, weiter substituiert ist, bei einem pH von 3 bis 6, insbesondere 4 bis 5, und einer Temperatur von 10 bis 60°C, insbesondere 20 bis 40°C, zu einer Verbindung der Formel (VI)

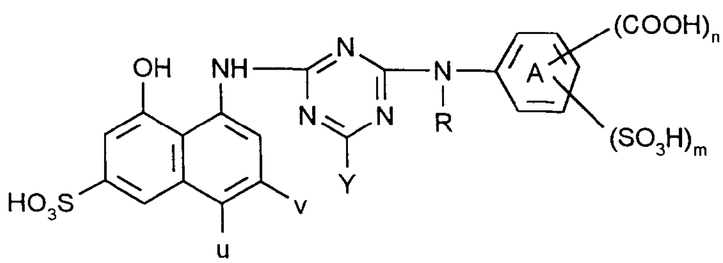

(VI),

worin
Y, u, v, R, m und n die in Anspruch 1 angegebene Bedeutung haben und der Ring A in der in Anspruch 1 beschriebenen Weise weitersubstituiert ist, kondensiert und diese dann mit dem Amin der Formel (II)

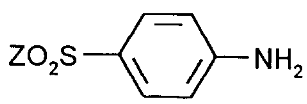

(II),

worin

Z die in Anspruch 1 angegebene Bedeutung hat,

im pH-Bereich von 3 bis 7, insbesondere 4 bis 6, nach seiner Diazotierung zu einem Farbstoff der Formel (I) kuppelt.

**8.** Feste Farbstoffpräparationen, die 30 bis 95 Gew.-% eines Farbstoffes der Formel (I) gemäß Anspruch 1, 5 bis 15 Gew.-% Wasser sowie gegebenenfalls noch weitere Zusätze enthalten.

**9.** Wäßrige Farbstofflösungen, die 5 bis 50 Gew.-% eines Farbstoffes der Formel (I) gemäß Anspruch 1 enthalten.

**10.** Verfahren zum Färben und Bedrucken von Hydroxyl- oder Amidgruppenhaltigen Materialien unter Verwendung der Farbstoffe gemäß Anspruch 1.

**11.** Substrate, gefärbt oder bedruckt nach dem Verfahren gemäß Anspruch 10.